# EUROPEAN PATENT APPLICATION

(11) **EP 1 602 917 A2**
(43) Date of publication of application: **07.12.2005**
(21) Application number: 05007401.2
(22) Date of filing: 05.04.2005
(51) Int. Cl.: G01N 21/55, C01B 31/02, G01N 33/53

(54) **Evanescent wave sensor containing nanostructures and methods of using the same**

(30) Priority: 01.06.2004 US 858770
(71) Applicant: Agilent Technologies, Inc., Palo Alto, CA 94306-2024 (US)
(72) Inventor: Roitman, Daniel, Menlo Park, California 94025 (US); Killeen, Kevin P., Palo Alto, California 94303 (US); Yi, Sungsoo, Sunnyvale,CA 94087 (US)
(74) Representative: Schoppe, Fritz

(57) **Abstract**

The invention provides an evanescent wave sensor containing a porous nanostructure layer. In general, a subject sensor contains a transparent substrate and a porous nanostructure layer bound to a surface of the substrate. Also provided by the invention are methods of using the subject sensors, e.g., in analyte detection, as well as kits and systems that include the subject sensors.

## Description

### BACKGROUND OF THE INVENTION

Sensitive and accurate methods for detecting molecular interactions are very desirable for a wide variety of applications, including drug discovery, environmental testing, diagnostics, gene expression analysis, genomics analysis, proteomics and for characterizing the binding of two molecules that are known to bind together.

In representative methods for detecting molecular interactions, target molecules (i.e., molecules of interest that are usually present in a sample) are labeled with a radioactive or optically detectable (e.g., a light-emitting or colorigenic) moiety and contacted with molecular probes for the target molecules under specific binding conditions. In these methods, binding of target molecules to the probes for those target molecules can be determined by assessing the amount of label associated with the probes. While these methods have found general use in many laboratories, their use is limited because they may only be employed in methods in which it is possible to label the target molecules. Furthermore, because labeling often requires relatively complex procedures and can result in inefficient or biased labeling, such detection methods may be complicated, insensitive and may produce unreliable results.

One type of label-free method for detecting molecular interactions exploits a surface-sensitive physical phenomenon called an evanescent wave. Such methods detect total internal reflection of light at a surface-solution interface that produces an electromagnetic field (an evanescent wave), extending a short distance (typically in the order of hundreds of nanometers) into the solution. The evanescent wave that occurs outside of a totally internally reflecting prism is sensitive to refractive index changes on the surface of the prism, and when an analyte binds to the outside of the reflective surface of the prism, the refractive index of the prism is altered. Thus, binding of an analyte can be detected by detecting changes in the degree of total internal reflection and the amplitude of the reflected light.

These evanescent wave methods, including surface plasmon resonance methods, usually employ a prism having a planar coating of metal (e.g., gold) on the reflective side of a dielectric material, e.g., a prism. Molecular probes, e.g., antibodies, are usually absorbed to the metal coating, an aqueous solution containing target molecules is passed over the molecular probes, and binding of the target molecules to the molecular probes is detected. Although such methods have become well used in the research community, their sensitivity is generally limited by the number of probe molecules that can be absorbed to the metal coating.

Accordingly, there is a great need for improved evanescent wave sensors. The invention described herein meets this need, and others.

### Relevant Literature

Relevant literature of interest includes Cooper (Anal. Bioan. Chem 2003 337:843-842), Homola (Anal. Bioan. Chem 2003 337:528-539), Fong et al. (Analytica Chimica Acta 2002 456:201-208), Schultz (Current Opinion in Biotechnology 2003 14:13-22), McDonnell (Current Opinion in Chemical Biology 2001 5:572-577), Cui et al. (Science 2001 293:1289-1292); published U.S. Patent Application 20020117659 and U.S.P.N. 5,242,828.

### SUMMARY OF THE INVENTION

The invention provides an evanescent wave sensor containing nanostructures. In general, a subject sensor contains a transparent substrate, e.g., a prism, and a nanostructure layer bound to a surface of the substrate. A metal layer may be present between the substrate and nanostructure layer. Optionally, the nanostructure layer may contain capture agents bound thereto. Also provided by the invention are methods in which a subject evanescent wave sensor is contacted with a sample, and binding of analytes in the sample to the nanostructure layer is assessed. The invention also provides kits and systems for performing the subject methods. The invention finds use in a variety of applications in which it is desirable to detect analytes, e.g., drug discovery, environmental and diagnostic applications.

### BRIEF DESCRIPTION OF THE DRAWINGS

The invention is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity. Included in the drawings are the following figures:

Figs. 1A-1C shows three exemplary evanescent wave sensor devices.

Figs. 2A-2F show exemplary evanescent wave sensors containing a nanostructure layer.

Fig. 3 shows an exemplary evanescent wave sensor containing a nanostructure layer having capture agents attached thereto.

Fig. 4 shows an exemplary evanescent wave sensor.

### DEFINITIONS

Before the present invention is further described, it is to be understood that this invention is not limited to particular embodiments described, as such may of course vary. It is also to be understood that the terminology used herein is for the purpose of describing particular embodiments only, and is not intended to be limiting. Unless defined otherwise, all technical and scientific terms used herein have the same meaning as commonly understood by one of ordinary skill in the art to which this invention belongs.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges, and are also encompassed within the invention, subject to any specifically excluded limit in the stated range. Where the stated range includes one or both of the limits, ranges excluding either or both of those included limits are also included in the invention.

Throughout this application, various publications, patents and published patent applications are cited. The disclosures of these publications, patents and published patent applications referenced in this application are hereby incorporated by reference in their entirety into the present disclosure. Citation herein by Applicant of a publication, patent, or published patent application is not an admission by Applicant of said publication, patent, or published patent application as prior art.

It must be noted that as used herein and in the appended claims, the singular forms "a", "and", and "the" include plural referents unless the context clearly dictates otherwise. Thus, for example, reference to "a layer" includes a plurality of such layers, and reference to "the capture agent" includes reference to one or more capture agent and equivalents thereof known to those skilled in the art, and so forth. It is further noted that the claims may be drafted to exclude any optional element. As such, this statement is intended to serve as antecedent basis for use of such exclusive terminology as "solely", "only" and the like in connection with the recitation of claim elements, or the use of a "negative" limitation.

The term "sample" as used herein relates to a material or mixture of materials, typically, although not necessarily, in fluid form, e.g., aqueous, containing one or more components of interest. Samples may be derived from a variety of sources such as from food stuffs, environmental materials, a biological sample such as tissue or fluid isolated from an individual, including but not limited to, for example, plasma, serum, spinal fluid, semen, lymph fluid, the external sections of the skin, respiratory, intestinal, and genitourinary tracts, tears, saliva, milk, blood cells, tumors, organs, and also samples of *in vitro* cell culture constituents (including but not limited to conditioned medium resulting from the growth of cells in cell culture medium, putatively virally infected cells, recombinant cells, and cell components).

Components in a sample are termed "analytes" herein. In many embodiments, the sample is a complex sample containing at least about 10², 5×10², 10³, 5×10³, 10⁴, 5×10⁴, 10⁵, 5×10⁵, 10⁶, 5×10⁶, 10⁷, 5×10⁷, 10⁸, 10⁹, 10¹⁰, 10¹¹, 10¹² or more species of analyte. In certain embodiments, a sample may contain a purified analyte.

The term "analyte" is used herein to refer to a known or unknown component of a sample, which will specifically bind to a capture agent on a substrate surface if the analyte and the capture agent are members of a specific binding pair. In general, analytes are chemical molecules of interest, e.g., biopolymers, i.e., an oligomer or polymer such as an oligonucleotide, a peptide, a polypeptide, an antibody, or the like. In this case, an "analyte" is referenced as a moiety in a mobile phase (typically fluid), to be detected by a "capture agent" which is bound to a substrate. However, either of the "analyte" or "capture agent" may be the one which is to be evaluated by the other (thus, either one could be an unknown mixture of analytes, e.g., polypeptides, to be evaluated by binding with the other).

A "biopolymer" is a polymer of one or more types of repeating units, regardless of the source (e.g., biological (e.g.,. naturally-occurring, obtained from a cell-based recombinant expression system, and the like) or synthetic). Biopolymers may be found in biological systems and particularly include polypeptides and polynucleotides, including compounds containing amino acids, nucleotides, or a mixture thereof.

The terms "polypeptide" and "protein" are used interchangeably throughout the application and mean at least two covalently attached amino acids, which includes proteins, polypeptides, oligopeptides and peptides. A polypeptide may be made up of naturally occurring amino acids and peptide bonds, synthetic peptidomimetic structures, or a mixture thereof. Thus "amino acid", or "peptide residue", as used herein encompasses both naturally occurring and synthetic amino acids. For example, homo-phenylalanine, citrulline and noreleucine are considered amino acids for the purposes of the invention. "Amino acid" also includes imino acid residues such as proline and hydroxyproline. The side chains may be in either the D- or the L- configuration.

In general, biopolymers, e.g., polypeptides or polynucleotides, may be of any length, e.g., greater than 2 monomers, greater than 4 monomers, greater than about 10 monomers, greater than about 20 monomers, greater than about 50 monomers, greater than about 100 monomers, greater than about 300 monomers, usually up to about 500, 1000 or 10,000 or more monomers in length. "Peptides" and "oligonucleotides" are generally greater than 2 monomers, greater than 4 monomers, greater than about 10 monomers, greater than about 20 monomers, usually up to about 10, 20, 30, 40, 50 or 100 monomers in length. In certain embodiments, peptides and oligonucleotides are between 5 and 30 amino acids in length.

The terms "polypeptide" and "protein" are used interchangeably herein. The term "polypeptide" includes polypeptides in which the conventional backbone has been replaced with non-naturally occurring or synthetic backbones, and peptides in which one or more of the conventional amino acids have been replaced with one or more non-naturally occurring or synthetic amino acids. The term "fusion protein" or grammatical equivalents thereof references a protein composed of a plurality of polypeptide components, that while typically not attached in their native state, typically are joined by their respective amino and carboxyl termini through a peptide linkage to form a single continuous polypeptide. Fusion proteins may be a combination of two, three or even four or more different proteins. The term polypeptide includes fusion proteins, including, but not limited to, fusion proteins with a heterologous amino acid sequence, fusions with heterologous and homologous leader sequences, with or without N-terminal methionine residues; immunologically tagged proteins; fusion proteins with detectable fusion partners, e.g., fusion proteins including as a fusion partner a fluorescent protein, β-galactosidase, luciferase, and the like.

The term "capture agent" refers to an agent that binds an analyte through an interaction that is sufficient to permit the agent to bind and concentrate the analyte from a homogeneous mixture of different analytes. The binding interaction is typically mediated by an affinity region of the capture agent. Typical capture agents include any moiety that can specifically bind to an analyte. In certain embodiments, a polypeptide, e.g., a monoclonal antibody, may be employed. Capture agents usually "specifically bind" one or more analytes.

Accordingly, the term "capture agent" refers to a molecule or a multimolecular complex which can specifically bind an analyte, e.g., specifically bind an analyte for the capture agent, with a dissociation constant (K_{D}) of less than about 10⁻⁴ M (e.g., less than about 10⁻⁶ M) without binding to other targets.

The term "specific binding" refers to the ability of a capture agent to preferentially bind to a particular analyte that is present in a homogeneous mixture of different analytes. Typically, a specific binding interaction will discriminate between desirable and undesirable analytes in a sample, typically more than about 10 to 100-fold or more (e.g., more than about 1000- or 10,000-fold). Typically, the affinity between a capture agent and analyte when they are specifically bound in a capture agent/analyte complex is characterized by a K_{D} (dissociation constant) of at least 10⁻⁴ M, at least 10⁻⁵ M, at least 10⁻⁶ M, at least 10⁻⁷ M, at least 10⁻⁸ M, at least 10⁻⁹ M, usually up to about 10⁻¹⁰ M.

The term "capture agent/analyte complex" is a complex that results from the specific binding of a capture agent with an analyte, i.e., a "binding partner pair". A capture agent and an analyte for the capture agent will usually specifically bind to each other under "conditions suitable for specific binding", where such conditions are those conditions (in terms of salt concentration, pH, detergent, protein concentration, temperature, etc.) which allow for binding to occur between capture agents and analytes to bind in solution. Such conditions, particularly with respect to antibodies and their antigens and nucleic acid hybridization are well known in the art (see, e.g., Harlow and Lane (Antibodies: A Laboratory Manual Cold Spring Harbor Laboratory, Cold Spring Harbor, N.Y. (1989) and Ausubel, et al, Short Protocols in Molecular Biology, 5th ed., Wiley & Sons, 2002). Conditions suitable for specific binding typically permit capture agents and target pairs that have a dissociation constant (K_{D}) of less than about 10⁻⁶ M to bind to each other, but not with other capture agents or targets. "Hybridizing" and "binding", with respect to polynucleotides, are used interchangeably.

As used herein, "binding partners" and equivalents refer to pairs of molecules that can be found in a capture agent/analyte complex, i.e., exhibit specific binding with each other.

The phrase "surface-bound capture agent" refers to a capture agent that is immobilized on a surface of a solid substrate. In certain embodiments, the capture agents employed herein are present on a surface of the same support, e.g., a subject sensor.

The term "pre-determined" refers to an element whose identity is known prior to its use. For example, a "pre-determined analyte" is an analyte whose identity is known prior to any binding to a capture agent. An element may be known by name, sequence, molecular weight, its function, or any other attribute or identifier. In some embodiments, the term "analyte of interest", i.e., an known analyte that is of interest, is used synonymously with the term "pre-determined analyte".

The terms "antibody" and "immunoglobulin" are used interchangeably herein to refer to a capture agent that has at least an epitope binding domain of an antibody. These terms are well understood by those in the field, and refer to a protein containing one or more polypeptides that specifically binds an antigen. One form of antibody constitutes the basic structural unit of an antibody. This form is a tetramer and consists of two identical pairs of antibody chains, each pair having one light and one heavy chain. In each pair, the light and heavy chain variable regions are together responsible for binding to an antigen, and the constant regions are responsible for the antibody effector functions. Types of antibodies, including antibody isotypes, monoclonal antibodies and antigen-binding fragments thereof (e.g., Fab, Fv, scFv, and Fd fragments, chimeric antibodies, humanized antibodies, single-chain antibodies, etc) are well known in the art and need not be described in any further detail.

The term "mixture", as used herein, refers to a combination of elements, e.g., capture agents or analytes, that are interspersed and not in any particular order. A mixture is homogeneous and not spatially separable into its different constituents. Examples of mixtures of elements include a number of different elements that are dissolved in the same aqueous solution, or a number of different elements attached to a solid support at random or in no particular order in which the different elements are not specially distinct. In other words, a mixture is not addressable. To be specific, an array of capture agents, as is commonly known in the art, is not a mixture of capture agents because the species of capture agents are spatially distinct and the array is addressable.

"Isolated" or "purified" generally refers to isolation of a substance (compound, polynucleotide, protein, polypeptide, polypeptide composition) such that the substance comprises a significant percent (e.g., greater than 2%, greater than 5%, greater than 10%, greater than 20%, greater than 50%, or more, usually up to about 90%-100%) of the sample in which it resides. In certain embodiments, a substantially purified component comprises at least 50%, 80%-85%, or 90-95% of the sample. Techniques for purifying polynucleotides and polypeptides of interest are well-known in the art and include, for example, ion-exchange chromatography, affinity chromatography and sedimentation according to density. Generally, a substance is purified when it exists in a sample in an amount, relative to other components of the sample, that is not found naturally.

The term "assessing" includes any form of measurement, and includes determining if an element is present or not. The terms "determining", "measuring", "evaluating", "assessing" and "assaying" are used interchangeably and may include quantitative and/or qualitative determinations. Assessing may be relative or absolute. "Assessing the presence of" includes determining the amount of something present, and/or determining whether it is present or absent.

The term "using" has its conventional meaning, and, as such, means employing, e.g., putting into service, a method or composition to attain an end. For example, if a program is used to create a file, a program is executed to make a file, the file usually being the output of the program. In another example, if a computer file is used, it is usually accessed, read, and the information stored in the file employed to attain an end. Similarly if a unique identifier, e.g., a barcode is used, the unique identifier is usually read to identify, for example, an object or file associated with the unique identifier.

By "remote location," it is meant a location other than the location at which the sensor is present and binding occurs. For example, a remote location could be another location (*e.g*., office, lab, *etc*.) in the same city, another location in a different city, another location in a different state, another location in a different country, *etc.* As such, when one item is indicated as being "remote" from another, what is meant is that the two items are at least in different rooms or different buildings, and may be at least one mile, ten miles, or at least one hundred miles apart. "Communicating" information references transmitting the data representing that information as electrical signals over a suitable communication channel (*e.g.*, a private or public network). "Forwarding" an item refers to any means of getting that item from one location to the next, whether by physically transporting that item or otherwise (where that is possible) and includes, at least in the case of data, physically transporting a medium carrying the data or communicating the data. An sensor "package" may contain only the sensor, although the package may include other features (such as a housing with a chamber). It will also be appreciated that throughout the present application, that words such as "top," "upper," and "lower" are used in a relative sense only.

A "computer-based system" refers to the hardware means, software means, and data storage means used to analyze the information in accordance with the invention. The minimum hardware of the computer-based systems typically comprises a central processing unit (CPU), input means, output means, and data storage means. A skilled artisan can readily appreciate that any one of the currently available computer-based system are suitable for use in embodiments in accordance with the invention. The data storage means may comprise any manufacture comprising a recording of the information as described above, or a memory access means that can access such a manufacture.

To "record" data, programming or other information on a computer readable medium refers to a process for storing information, using any such methods as known in the art. Any convenient data storage structure may be chosen, based on the means used to access the stored information. A variety of data processor programs and formats can be used for storage, *e.g.* word processing text file, database format, *etc.*

A "processor" references any hardware and/or software combination that will perform the functions required of it. For example, any processor herein may be a programmable digital microprocessor such as available in the form of an electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

The term "nanostructure" is to be interpreted as encompassing linear, coiled and branched nanowires and nanotubes, as are well known in the art, as well as lattice-like nanostructures and three dimensional porous structures, such as porous foams, mesoporous silicates, and the like. Nanostructures, including the above-recited three-dimensional structures are discussed in great detail in the books Yang et al., *The Chemistry of Nanostructured Materials* (World Scientific Pub Co, 2003) and Nalwa et al., Handbook of Nanostructured Materials and Nanotechnology (Academic Press, 2000). The hydrogels described in USPN 5,242,828 are not nanostructures and, as such, are not encompassed by the term "nanostructure".

If one compositions is "bound" to another composition, the bond between the compositions do not have to be in direct contact with each other. In other words, bonding may be direct or indirect, and, as such, if two compositions (e.g., a substrate and a nanostructure layer) are bound to each other, there may be at least one other composition (e.g., anotherlayer) between to those compositions. Binding between any two compositions described herein may be covalent or non-covalent.

A "prism" is an transparent body that is bounded in part by two nonparallel plane faces and is used to refract or disperse a beam of light. The term prism encompasses round, cylindrical-plane lenses (e.g., semicircular cylinders) and a plurality of prisms in contact with each other.

Other definitions of terms appear throughout the specification.

### DETAILED DESCRIPTION OF THE INVENTION

The invention provides an evanescent wave sensor containing nanostructures. In general, a subject sensor contains a transparent substrate, e.g., a prism, and a nanostructure layer bound to a surface of the substrate. A metal layer may be present between the substrate and nanostructure layer. Optionally, the nanostructure layer may contain capture agents bound thereto. Also provided by the invention are methods in which a subject evanescent wave sensor is contacted with a sample, and binding of analytes in the sample to the nanostructure layer is assessed. The invention also provides kits and systems for performing the subject methods. The invention finds use in a variety of applications in which it is desirable to detect analytes, e.g., drug discovery, environmental and diagnostic applications.

In describing the invention in greater detail than provided in the Summary and as informed by the Background and Definitions provided above, the subject evanescent wave sensors are described first, followed by a discussion of methods of using a subject evanescent wave sensor to detect an analyte. Finally, kits and systems for performing the subject methods are described.

### EVANESCENT WAVE SENSORS

In describing the subject nanostructure-containing evanescent wave sensors, an overview of the subject sensors will be described first, followed by a description of nanostructures suitable for use in the subject sensors. Exemplary methods by which capture agents may by linked to the subject nanostructures are then presented. In use, a subject evanescent wave sensor may be adapted for use in particular type of detection method, e.g., surface plasmon resonance, and, as such, may dimensioned and made of materials suitable for that method. Since many evanescent wave detection methods are generally well known in the art (e.g., surface plasmon resonance, grating coupler surface plasmon resonance, resonance mirror sensing and waveguide sensor interferometry using Mach-Zender or polarimetric methods, direct and indirect evanescent wave detection methods etc.; see also Myszka J. Mol. Rec. 1999 12:390-408 and *Biomolecular Sensors,* edited by Gizeli and Lowe. Taylor & Francis, May 2002), one of skill in the art would know how to adapt a subject sensor for use in particular method without undue effort. Exemplary surface plasmon resonance methods will be described in greater detail below.

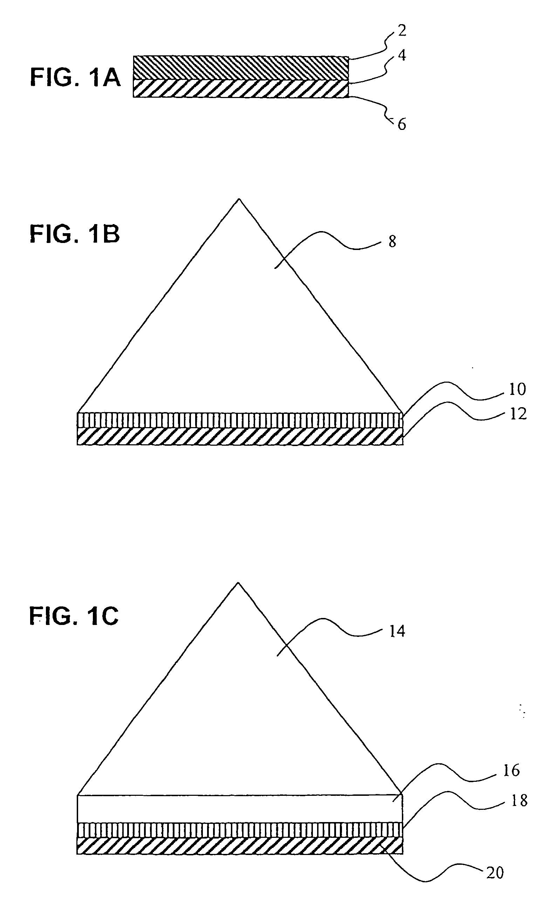

With reference to Fig. 1A, a subject sensor typically contains at least two components, represented by substrate 2 and nanostructure layer 6. Element 4, representing a metal layer may be present between nanostructure layer 6 and substrate 2 in certain embodiments. Substrate 2 and metal layer 4 are well known components of many known evanescent wave sensors and need not be described herein in any great detail. Substrate 2 has in certain embodiments at least one planar surface and is transparent to the particular light beam used for detection. In many embodiments, the substrate is made of a dielectric, transparent material (i.e., a material transparent to light at wavelengths used for analyte detection using the subject sensor) having a refractive index (n) of about 1 to about 1.6, e.g., glass, quartz, silica, and plastic and moldable materials, such as cyclic olefin (e.g., TOPAS™ or ZEONOR™; n=1.52), polydimethylsiloxane (PDMS; n is between 1.43 and 1.57), polymethylmethyl acrylate (PMMA; e.g., LUCITE™ or PLEXIGLASS™; n=1.49). In particular embodiments, the refractive index of the substrate is matched to that of the sample to be analyzed using the subject methods, and, as such may have a refractive index of about 1.3 to about 1.45. Further, a layer of dielectric material (e.g., TiO₂ or SiO₂ or the like), of about 300-600nm thickness (e.g. about 400 nm) may be present between metal layer 4, if present, and nanostructure layer 6. Such dielectric materials and their use in evanescent wave sensors are well known in the art, and, used herein, may sharpen resonance peaks, serve as an adhesion layer, and protect any metal layer during nanostructure layer fabrication.

One planar surface of the substrate 2 may be coated in a film of metal, usually a free electron metal such as, e.g., copper, silver, aluminum or gold. As is well known in the art, different metals produce different resonance effects, and, as such, the choice of metal depends on the resonance effect desired. This metal coating may be produced using known methods, e.g., sputter or coating, and its thickness may be in the range of about 200Å to about 600Å. In particular embodiments, the substrate is coated in gold, which is well known in surface plasmon resonance detectors. A layer of nanostructures 6 is present upon a surface of the substrate, and may be present upon optional metal coating 4. In certain embodiments an adhesion layer may be present between metal coating 4 and nanostructure layer 6. A metal grating, as is commonly used in certain surface plasmon resonance methods, may also be present in a subject sensor. The nanostructure layer will be described in greater detail below.

Figs. 1B and 1C illustrate further embodiments of the invention. Fig. 1B shows a sensor having three components, represented by substrate 8, optional metal layer 10 and nanostructure layer 12. In this sensor, substrate 8 is a prism, as is commonly used in evanescent wave detectors. Fig. 1C shows a sensor having four components, represented by substrate 16, optional metal layer 18 and nanostructure layer 20. In this sensor, prism 14 is affixed to substrate 16 such that light can pass through the prism 14 and substrate 16 and reflect off optional metal layer 18. The refractive indices of prism 14 and substrate 16 may be matched. The arrangement of elements shown in Fig. 1C is most often used in evanescent wave detectors. As mentioned above, a layer of dielectric material may be present between the metal layer, if present, and the nanostructure layer.

In many embodiments, substrates are transparent to monochromatic light having a wavelength in the range of about 0.6 µm to about 2.0 µm, e.g., about 0.7 µm to about 1.8 µm, about 0.8 µm to about 1.6 µm, etc., depending on the light beam used in the subject methods. For example, a subject substrate may be transparent to monochromatic light having a wavelength of about 1.0 µm, about 1.1 µm, about 1.2 µm, about 1.3 µm, about 1.4 µm, about 1.5 µm or about 1.6 µm etc.

The nanostructure layer indicated by element 6 of Fig. 1A contains nanostructures. In general, nanostructures that may be used in the subject sensor are well known in the art (and reviewed in Yang et al. (*The Chemistry of Nanostructured Materials* (World Scientific Pub Co, 2003)) and Nalwa et al. (Handbook of Nanostructured Materials and Nanotechnology (Academic Press, 2000)) and includes linear and branched nanorods or nanowires (Li et al., Ann. N.Y. Acad. Sci. 2003 1006:104-21;Yan et al, J. Am. Chem. Soc. 203 125:4728-4729), nanotubes (e.g., Martin et al., Nat. Rev. Drug Discov. 2003 2:29-37), nanocoils (see, e.g., Bai et al., Materials Letters 52003 7:2629-2633), and porous three-dimensional nano-matrices such as nano-fibers, mesoporous silicates, polymeric foams (see, e.g., Cooper et al, Adv. Mater. 2003 15, 1049-1059, Schuth et al, Adv. Mater. 2002 14, 629-637 and Stein et al, Adv. Mater. 2000 12, 1403-1419) and the like. The nanostructures used herein may be monolithic and may have a wall thickness or diameter of 1 to about 100 nm (e.g., 5-50 nm) in order to minimize light scattering. In general, the subject nanostructure layer is porous to biological macromolecules, e.g., proteins, nucleic acids and the like. The subject nanostructure layer may have a thickness of about 0.2 µm to about 20 µm, e.g., 0.5 µm -10 µm or 0.5 µm -1.0 µm.

Porosity indicates the pore size of a three-dimensional nanostructure, e.g., a mesoporous silicate, or distance between two discrete nanostructures in other nanostructures. In certain embodiments a subject nanostructure layer has a porous morphology with a pore size of about 20 nm to about 2.0 µm, or greater, (e.g., about 25 nm to about 1200 nm, about 30 nm to about 800 nm, about 40 nm to about 300 nm or about 50 to about 200 nm as determined by the methods of Sing et al. (Pure Appl. Chem. 1985 57 603-619) and Rouquerol et al. (Pure Appl. Chem. 1994 66:1739-1758). Exemplary pore sizes include about 100 nm, about 200 nm, about 300 nm, about 400 nm, and about 500 nm.

Also as is common in many known nanostructures, the subject nanostructures may have an ordered, organized structure and a uniform pore size (e.g., a pore size that typically does not vary by more than 50% of an average pore size), and, in many embodiments may be crystalline. In certain, but not all, embodiments, the subject nanostructures may be an assembly of other macromolecules and may be solid and stable, and not gel-like or polymeric.

As discussed above, the pore size of the nanostructure layer may vary from 20 nm to 2.0 µm and, in certain embodiments, may be greater than 2.0 µm. In general, if the refractive index of the nanostructures is closely matched to that of the sample (e.g., the difference in refractive indices is less than about 0.1 or 0.05, for example), then the pore size may be increased without any significant loss of sensitivity (manifested as, e.g., decreased resonance signal or reduced reflected light) of the sensor. Accordingly, the size of the pores present in a subject nanostructure layer is primarily determined by the materials used for fabrication of the subject nanostructures, and the refractive index of the sample to be assayed. For sensors in which the nanostructures are perfectly matched (i.e., within about 0.01 refractive index units), the nanostructure layer pore size may be about or greater than about 2.0 µm. In certain embodiments, the subject nanostructure layer has a pore size of less than or equal to about 5%-20% of the wavelength of light used for detection. In other words, if a monochromatic light of 1.0 µm is used for detection using a subject sensor, that sensor may have a nanostructure layer having a pore size of less than about 50-200 nm. In certain embodiments the subject nanostructures may have a pore size between about 5% and 10% of the wavelength of light used for detection.

The subject nanostructures may be made from inorganic materials and may be transparent, i.e., low-absorbing, to monochromatic light at the wavelength used for detection, e.g., about 0.6 µm to about 2.0 µm, e.g., about 0.8 µm to about 1.8 µm, about 1.0 µm to about 1.6 µm, etc. For example, the subject nanostructures may be transparent to monochromatic light having a wavelength of about 1.0 µm, about 1.1 µm, about 1.2 µm, about 1.3 µm, about 1.4 µm, about 1.5 µm or about 1.6 µm etc., as desired. In certain embodiments, the refractive index of the nanostructure layer may be matched to that of an aqueous sample to be analyzed (in certain embodiments having a refractive index of 1.3-1.4, or about 1.33), and, in certain embodiments may be matched to that of the substrate.

The subject nanostructures may be made from metal oxides, e.g., oxides of silicon (e.g., silicates such as silicon dioxide, i.e., silica), aluminum, titanium, zircon, indium, etc., or a mixture thereof, although other materials, e.g., polymers, such as polyolefins (e.g., cyclic olefins COC and COP; i.e., TOPAS™ and ZEONOR™), polystyrene, perfluoroethylene, polytetrafluoroethylene (PTFE), perfluoroalkyl (PFA; TEFLON™), PMMA (LUCITE™, acrylic) and polyvinylidine fluoride (PVDF) and the like may also be used. In many embodiments materials having a refractive index of 1.3-1.5 (e.g., 1.34-1.46), for example, PTFE (n=1.34), PFA (n=1.34), PVDF and fused silica (n=1.46) may be used. Other useful materials (e.g., cyclic olefins) have a refractive index of 1.51-1.58. Certain other materials having a refractive index of 1.59 or greater, e.g., aluminum oxide (n>1.6), polycarbonate (n=1.59), polyimide (n=1.66), polyester n=1.65) and titanium oxide (n>2.5) may also be used.

In general, if materials having a higher refractive index are used for the subject nanostructures (as compared to the refractive index of a sample to be assessed), then the pore size of the nanostructures should be reduced. In certain embodiments, the pore size of the nanostructures is typically less than about 10% of λ/(n/nₒ - 1), where λ is the wavelength of light used, n is the refractive index of the material used, and nₒ is the refractive index of the sample. For example, if the subject nanostructures are made from Topas (nₒ = 1.51) and the subject sample has a refractive index that is the same as that of water (n = 1.33), then the subject nanostructures may have a pore size of less than about 1.1 µm.

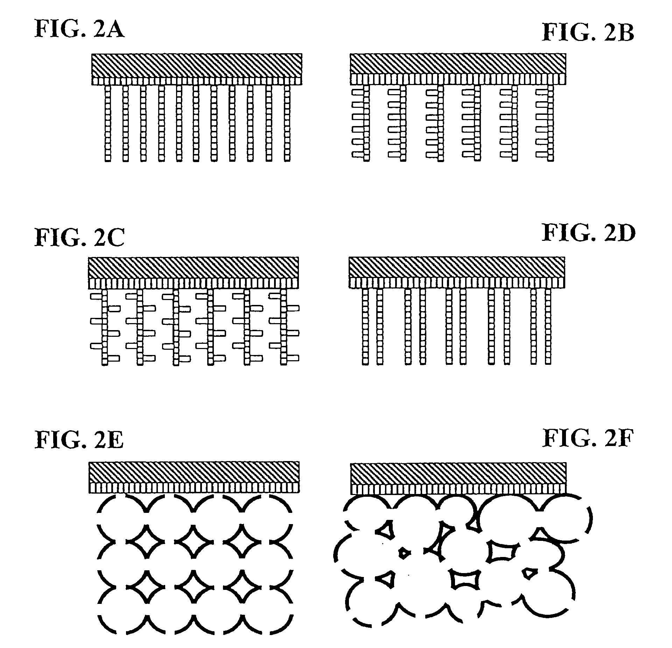

Exemplary subject evanescent wave sensors are shown in cross section in Figs. 2A-2F. As discussed above, a subject sensor may have linear nanorods or nanowires (2A), branched nanorods or nanowires (2B and 2C), nanotubes (2D), or a three dimensional porous structure containing interconnected pores or cavities (2E and 2F), for example. Each of the biosensing areas described in 2A-2F has a greatly increased surface area as compared to prior art devices that do not contain a nanostructure layer, and allows substantially unhindered diffusion of macromolecules.

Methods for making subject nanostructures are generally well known in the art (and reviewed in Yang et al. (*The Chemistry of Nanostructured Materials* (World Scientific Pub Co, 2003)) and Nalwa et al. (Handbook of Nanostructured Materials and Nanotechnology (Academic Press, 2000)). Accordingly, a variety of methods may be used, including laser ablation, arc discharge, chemical vapor deposition methods, nanoscale patterning with block copolymers, solution synthesis, electrochemical synthesis, self assembly or top-down lithography. These methods are readily adapted to producing a nanostructure layer (e.g., a polymeric or inorganic layer) on a subject substrate. As such, the subject nanostructures may be fabricated on the sensor, or fabricated at a location remote to the sensor and attached to the sensor's metal layer prior to use. In particular embodiments, the subject nanostructures can be made as described by D. Zhao et al, (Science 1998 279: 548 "Triblock Copolymer Synthesis of Mesoporous Silica with periodic 50 to 300 angstrom Pores" or Singh et al. (Mat Res Innovat 2002 5: 178-184 "Fabrication of nanoporous TiO₂ films through Benard-Marangoni convection". In certain embodiments, the subject nanostructures may be made by mixing a soluble metal-organic precursor (e.g., TEOS, tetraethylorthosilicate for instance) with an alcohol, water and a catalyst (e.g., an acid such as hydrochloric acid) plus surfactants or block copolymers. A film may be coated on the substrate before the solution gels via dipping or spin casting. Afterwards, the solvent evaporates, and the substrate is heated to drive off the organic phase, leaving behind a mesoporous inorganic structure. For making polymer structures, typically a solution of the polymer is cast on the surface of the substrate, and the substrate is brought to a non-solvent environment in which a rapid solvent exchange occurs and the pores are formed by phase separation and precipitation. Although such a layer is not required, but as would be recognized by one of skill in the art, the layer of metal, as discussed above, may be first coated in an adhesion layer in order to bond the subject nanostructure layer to the layer of metal. Also as would be recognized by one of skill in the art, the layer of metal, e.g., a gold layer, may be first treated, e.g., passivated, prior to nanostructure synthesis.

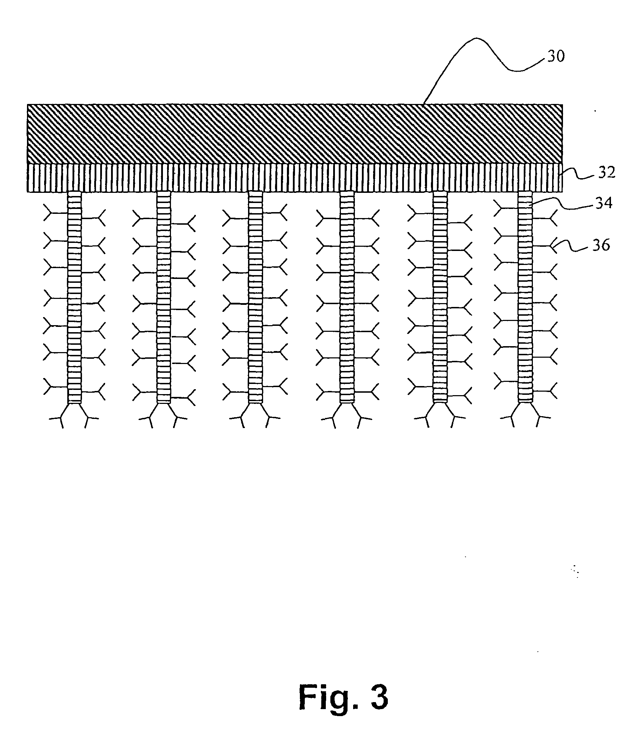

As mentioned above, a subject nanostructure layer may contain capture agents bound thereto. Methods for binding capture agents to nanostructures are known in the art and have been employed in the fabrication of other nanostructure-containing sensors (see, e.g., published U.S. patent application 20020117659; Cui et al., Science 293: 1289-1292, for example). For example, the nanostructures often used in the subject compositions contain surface silanol (Si-OH) groups that act as a convenient grafting points. These silanol groups may be silanized to produce reactive groups (e.g., amine, aldehyde or epoxy groups, etc.) to which captures agents may be bound using well known chemistry. Such groups may be used to bind nucleic acids, proteins and other molecules, as is well known in the art. Silanol-based attachment of molecules to nanostructures is reviewed in Stein et al., (Adv. Mat. 2000 12: 1403-1419), for example. In certain embodiments, particularly those in which the subject nanostructures have a net charge (e.g., Al₂O₃ nanostructures have a positive charge), nanostructures may be coated in a self-assembled monolayer, e.g., functionalized alkylphosphates (TOPO), mercaptoundecanoic acid (MUA), or dendrons, to enable capture agent binding to the nanostructure layer. Figure 3 illustrates an exemplary subject sensor containing capture agents bound thereto. In this example, element 30 is a substrate, 32 is an optional metal layer, 34 is a nanostructure, and 36 is a capture agent.

### METHODS OF DETECTING ANALYTES

As discussed above, the invention provides a nanostructure-containing evanescent wave sensor. Such sensors may be used to detect analytes using a variety of evanescence wave detection methodologies, including surface plasmon resonance and the like. The subject sensors are readily used in these methods.

In general, the subject methods involve contacting a subject sensor with a sample under specific binding conditions and assessing binding of analytes in the sample to the nanostructure layer by evanescent wave detection. In certain embodiments, an evanescent wave is detected by reflecting light off a metal layer, and detecting the angle and/or intensity of the reflected light. In certain embodiments, a graphical image of the sensor surface may be produced. Binding of an analyte to capture agents present on the sensor can be detected by evaluating changes in reflected light angle and/or intensity, for example. The nanostructure layer, because it may be porous and contain capture agents that are present in three dimensions, effectively increases the capture agent-containing surface area of the sensor without causing significant or detectable steric interference and reduced analyte diffusion, problems common to many prior art devices.

In particular embodiments, a subject sensor may be used in surface plasmon resonance (SPR) methods. SPR may be achieved by using the evanescent wave which is generated when a laser beam, linearly polarized parallel to the plane of incidence, impinges onto a prism coated with a thin metal film. SPR is most easily observed as a change in the total internally reflected light just past the critical angle of the prism. This angle of minimum reflectivity (denoted as the SPR angle) shifts to higher angles as material is adsorbed onto the metal layer. The shift in the angle can be converted to a measure of the thickness of the adsorbed or added material by using complex Fresnel calculations and can be used to detect the presence or absence of analytes bound to the nanostructure layer on top of the metal layer. As is well known, SPR may be performed with or without a surface grating (in addition to the prism). Accordingly a subject sensor may contain a grating, and may be employed in other SPR methods other than that those methods explicitly described in detail herein.

In using SPR to test for binding between agents, a beam of light from a laser source is directed through a prism onto a subject sensor containing a transparent substrate, which has one external surface covered with a thin film of a metal, which in turn is covered with a capture-agent containing nanostructure layer that binds an analyte, as discussed above. The SPR angle changes upon analyte binding to the nanostructure layer. By monitoring either the position of the SPR angle or the reflectivity at a fixed angle near the SPR angle, the presence or absence of an analyte in the sample can be detected.

Various types of equipment for using SPR with a biosensor for biological or biochemical or chemical substances are known in the art (and described by Liedberg et al. (1983) Sensors and Actuators 4:299, European Patent Application 0305108 and U.S. Pat. No. 5,374,563, etc.), including grating coupled systems, optical waveguide systems and prism coupled attenuated total reflection systems.

In certain embodiments, a light source (typically a monochromatic light source) is used to illuminate the prism/metal film at an incident angle that is near the SPR angle, and the reflected light is detected at a fixed angle with a CCD camera to produce an SPR image. The SPR image arises from variations in the reflected light intensity from different parts of the sample; these variations are created by any changes in organic film thickness or changes in index of refraction that occur upon adsorption onto the modified gold surface. SPR imaging is sensitive only to molecules in proximity to the surface, therefore unbound molecules remaining in solution do not interfere with in situ measurements.

In certain embodiments, the angles of incidence and reflection are "swept" together through the resonance angle, and the light intensity is monitored as function of angle. Very close to the resonance angle, the reflected light is strongly absorbed by the gold surface, and the reflected light becomes strongly reduced. In other embodiments, the source and detector angles are fixed near the resonance angle at an initial wavelength, and the wavelength is swept to step the resonance point through the fixed angle. The beam is collimated and an entire image of the substrate is captured. The wavelength of the tunable laser is between typically between 1.4 µm to about 1.6 µm (i.e., having a 200 nm sweep), although tunable lasers having other sweeps (e.g., in the 850 to 900 nm range may also be used).

In particular embodiments, long wavelength light (e.g., having a wavelength of 1.5 µm or greater), and a subject sensor having a nanostructure layer having a refractive index close to 1.33 and pores of 100-500 nm may be used.

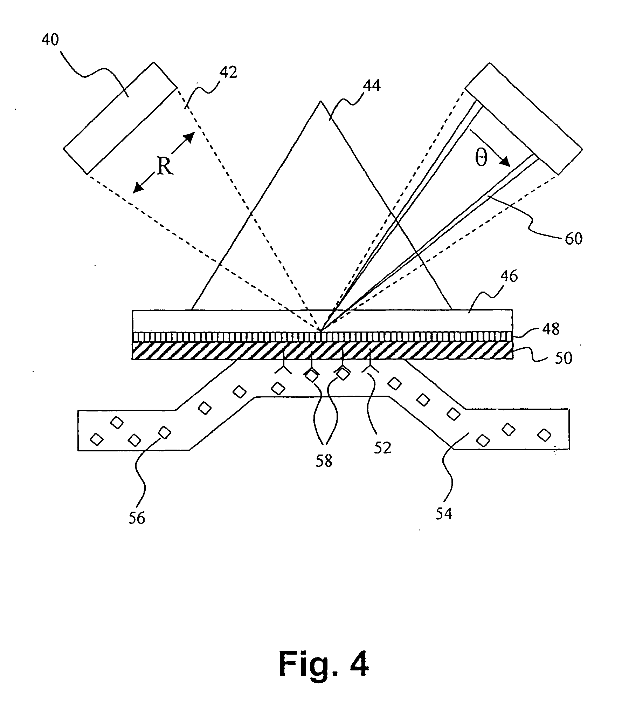

An exemplary method of detecting analytes employing surface plasmon resonance is shown in Fig. 4. A sensor reader is used to accomplish the task of obtaining data from a subject sensor, which readers are generally well known in the art (see U.S. Patent 6,466,323, for example). The reader typically contains a light source 40 and a detector 60, and is under the control of a microprocessor and suitable software. Programming embodying the methodology may be loaded onto the reader/scanner computer, or the computer/microprocessor may be preprogrammed to run with the same. The programming can be recorded on computer readable media (*e.g.*, any medium that can be read and accessed directly by a computer). Such media include, but are not limited to: magnetic storage media, such as floppy discs, hard disc storage medium, and magnetic tape; optical storage media such as CD-ROM; electrical storage media such as RAM and ROM; and hybrids of these categories such as magnetic/optical storage media. One of skill in the art can readily appreciate how any of the presently known computer readable mediums can be used to create a manufacture comprising a recording of the database information.

A light source 40 is provided, which may be a wavelength-tunable laser. By way of various optics, generally including a collimator, a beam 42 is directed toward a prism 44. The beam passes into and through substrate 46. Beam 42 undergoes total internal reflection within the substrate at its boundary with a thin metal coating 48 and nanostructure layer 50 set upon the a substantially planar surface of the substrate in at least this region.

In one embodiment, capture agents 52 are bound to the nanostructure layer, and the nanostructure layer is bound to the substrate. Analytes of interest 56 that are present in a sample 54 are shown interacting with capture agents for those analytes 58. As a greater number ofbiomolecules become bound thereto, their mass concentration increases, resulting (for a given incident angle of light in an applied range of beam angles "R") in a light reflectance angle "θ" where light intensity maximizes, minimizes, or varies. The resultant signal 60 may be collected photodetector. In certain embodiments, a collimated beam of light of varying wavelength may be used, and data may be collected using a compound metal oxide semiconductor (CMOS) imager or a charge coupled device (CCD) imager. In this manner, data for an entire sensor or for selected sections of a sensor can be collected simultaneously.

In certain embodiments, a subject reader may be provided with movement stages (*e.g.*, x-axis; y-axis or tilting) in order to use read a subject sensor in raster fashion or otherwise. Furthermore, whether accomplished in such a manner or otherwise, taking multiple scans of sensor may be useful for watching the time evolution of a signal.

Light having a wavelength of between about 400 nm to about 3.0 µm may used in the subject methods. In particular embodiments, the wavelength of light used is from about 1.0 µm to about 2.0 µm, e.g., about 1.1 µm, about 1.2 µm, about 1.3 µm, about 1.4 µm, about 1.5 µm, or about 1.6 µm, etc. In certain embodiments, the light used is monochromatic light, and the light may be polarized, and in certain embodiments, the wavelength of light used may change, i.e., may "sweep" during reading of a sensor. Accordingly, the light used may not be of a static wavelength. In typical embodiments, the wavelength may sweep between two different wavelengths separated by about 100 nm, about 200 nm, about 300 nm or about 400 nm or more, with the lower wavelength being any of the wavelengths listed above.

The evanescent wave reader, in combination with a subject sensor, may be used as a system for performing these methods. The subject methods and system may be used to investigate capture agent/analyte complexes having a binding constant K_{D} of less than about 10⁻⁴ M, less than about 10⁻⁵ M, less than about 10⁻⁶ M, less than about 10⁻⁷ M, less than about 10⁻⁸ M, less than about 10⁻⁹ M or less than about 10⁻¹⁰ M, or less.

### KITS

Also provided by the subject invention are kits for practicing the subject methods, as described above. The subject kits at least include a subject sensor that, in certain embodiments, may contain capture agents. The various components of the kit may be present in separate containers or certain compatible components may be precombined into a single container, as desired.

In addition to above-mentioned components, the subject kits typically further include instructions for using the components of the kit to practice the subject methods. The instructions for practicing the subject methods are generally recorded on a suitable recording medium. For example, the instructions may be printed on a substrate, such as paper or plastic, etc. As such, the instructions may be present in the kits as a package insert, in the labeling of the container of the kit or components thereof (i.e., associated with the packaging or subpackaging) etc. In other embodiments, the instructions are present as an electronic storage data file present on a suitable computer readable storage medium, e.g. CD-ROM, diskette, etc. In yet other embodiments, the actual instructions are not present in the kit, but means for obtaining the instructions from a remote source, e.g. via the internet, are provided. An example of this embodiment is a kit that includes a web address where the instructions can be viewed and/or from which the instructions can be downloaded. As with the instructions, this means for obtaining the instructions is recorded on a suitable substrate.

In addition to the subject database, programming and instructions, the kits may also include one or more control analyte mixtures, e.g., two or more control analytes for use in testing the kit.

### UTILITY

The subject methods and compositions find use in a variety applications, where such applications are generally analyte detection applications in which the presence of a particular analyte in a given sample is detected at least qualitatively, if not quantitatively. Protocols for carrying out SPR assays are well known to those of skill in the art and need not be described in great detail here. Generally, the sample suspected of comprising the analyte of interest is contacted a subject sensor under conditions sufficient for the analyte to bind to its respective binding pair member that is present on the sensor. Thus, if the analyte of interest is present in the sample, it binds to the sensor at the site of its complementary binding member and a complex is formed on the sensor surface. The presence of this binding complex on the surface of the sensor is then detected using SPR.

Specific analyte detection applications of interest include hybridization assays in which the nucleic acid capture agents are employed and protein binding assays in which polypeptides, e.g., antibodies, are employed. In these assays, a sample is first prepared and following sample preparation, the sample is contacted with a subject sensor under specific binding conditions, whereby complexes are formed between target nucleic acids or polypeptides (or other molecules) that are complementary to probe sequences attached to the sensor surface. The presence of complexes is then detected using SPR.

In any case, results from reading a sensor may be raw results or may be processed results such as obtained by applying saturation factors to the readings, rejecting a reading which is above or below a predetermined threshold and/or any conclusions from the results (such as whether or not a particular analytes may have been present in the sample). The results of the reading (processed or not) may be forwarded (such as by communication) to a remote location if desired, and received there for further use (such as further processing). Stated otherwise, in certain variations, the subject methods may include a step of transmitting data from at least one of the detecting and deriving steps, to a remote location. The data may be transmitted to the remote location for further evaluation and/or use. Any convenient telecommunications means may be employed for transmitting the data, *e.g.*, facsimile, modem, Intemet, *etc*. Alternatively, or in addition, the data representing results may be stored on a computer-readable medium of any variety such as noted above or otherwise. Retaining such information may be useful for any of a variety of reasons as will be appreciated by those with skill in the art.

If grating is provided, it can be used for reducing total reflection of one or more monochromatic source signals individually. It may also find use in conjunction with broadband sources (together with filters and/or color discriminating detectors) in SPR signal discrimination on the basis of color.

### EXAMPLES

The following examples are put forth so as to provide those of ordinary skill in the art with a complete disclosure and description of how to make and use the present invention, and are not intended to limit the scope of what the inventors regard as their invention. Efforts have been made to ensure accuracy with respect to numbers used (e.g. amounts, temperature, etc.) but some experimental errors and deviations should be accounted for. Unless indicated otherwise, parts are parts by weight, molecular weight is weight average molecular weight, temperature is in degrees Centigrade, and pressure is at or near atmospheric.

### EXAMPLE 1

A 1 inch by 3 inch glass slide is coated with circular gold regions (of about 500 µm diameter, 300 nm thick), and a precursor solution containing TEOS and surfactants, is spin cast onto the slide to a thickness of about 0.5 to 1 microns. The slide is calcinated in an oven to burn of the organic phase and to obtain a nanoporous silica film on the surface of the slide. The film is activated in an oxygen plasma environment and then submerged in a 1% methanol solution of aldehyde methoxysilane (from Gelest). After rinsing, the film is exposed to a 1mg/ml solution of protein A in the presence of sodium borohydride (reductive amination) to immobilize the ligand protein A. The slide is mounted in a fluidic chamber with the gold spots side in the inside of the chamber, and the glass back towards the surface of a coupling prism. The prism and the slide is optically coupled with an index matching fluid or some other means (e.g. a PDMS gasket). The system is tested for the binding of protein A with immunoglobulins (IgG).

The above discussion demonstrate a new sensor that finds particular use in assessing analytes using evanescent waves. Such sensors are more sensitive than currently used sensors because they increase they contain more capture agents per sensor region, and permit the use of longer wavelength light in sensing. Accordingly, as such, the subject sensor represents a significant contribution to the art.

All publications and patents cited in this specification are herein incorporated by reference as if each individual publication or patent were specifically and individually indicated to be incorporated by reference. The citation of any publication is for its disclosure prior to the filing date and should not be construed as an admission that the present invention is not entitled to antedate such publication by virtue of prior invention.

While the present invention has been described with reference to the specific embodiments thereof, it should be understood by those skilled in the art that various changes may be made and equivalents may be substituted without departing from the true spirit and scope of the invention. In addition, many modifications may be made to adapt a particular situation, material, composition of matter, process, process step or steps, to the objective, spirit and scope of the present invention. All such modifications are intended to be within the scope of the claims appended hereto.

## Claims

1. An evanescent wave sensor, comprising:
a transparent substrate; and
a porous nanostructure layer bound to a surface of said transparent substrate.

2. The sensor of claim 1, wherein said porous nanostructure layer is directly or indirectly bound to said surface..

3. The sensor of claims 1-2, wherein said porous nanostructure layer contains a capture agent.

4. The sensor of claim 1-3, wherein said porous nanostructure layer contains cavities.

5. The sensor of claim 1-4, wherein said porous nanostructure layer has a pore size ranging from about 20 nm to about 2 µm.

6. The sensor of claim 1-5, wherein a layer of metal is present between said substrate and said nanostructure layer, and said sensor is a surface plasmon resonance sensor.

7. The sensor of claim 1-6, wherein said porous nanostructure layer is low-absorbing at a wavelength of light used for surface plasmon resonance.

8. A method, comprising:
contacting an evanescent wave sensor comprising:
a transparent substrate; and
a porous nanostructure layer bound to a surface of said
transparent substrate,
with a sample, and
assessing binding of analytes in said sample to said porous nanostructure layer by detecting an evanescent wave.

9. The method of claim 8, wherein said assessing is done using surface plasmon resonance.

10. The method of claim 8, wherein said assessing employs light of a wavelength of about 1 µm to about 1.6 µm.
